Europäisches Patentamt

European Patent Office

Office européen des brevets

(11) Publication number: **0 390 447**
**A2**

## (12) EUROPEAN PATENT APPLICATION

(21) Application number: 90303156.5

(22) Date of filing: 23.03.90

(51) Int. Cl.5· **G02B 6/44, H01B 11/22**

(30) Priority: 31.03.89 GB 8907344

(43) Date of publication of application:
**03.10.90 Bulletin 90/40**

(84) Designated Contracting States:
**DE DK ES IT**

(71) Applicant: **Telephone Cables Limited**
**Chequers Lane**
**Dagenham Essex RM9 6QA(GB)**

(72) Inventor: **O'Bow-Hove, Philip Alexander**
**Flat 4, 33 De Vere Gardens**
**Kensington, London W8 5AW(GB)**

(74) Representative: **Kirby, Harold Victor Albert**
**Central Patent Department Wembley Office**
**The General Electric Company, p.l.c. Hirst**
**Research Centre East Lane**
**Wembley Middlesex HA9 7PP(GB)**

(54) Optical fibre cable core.

(57) An optical fibre cable core e.g. for submarine telcommunications comprising, as the main longitudinal strength member, a central metallic stranded member comprising, in a fully-occupied peripheral layer of longitudinal members circumscribing or inscribing the stranded member surface, at least one helically-wound, laser-welded thin-walled hermetically-sealed metal tube loosely housing at least one optical fibre, and a non-metallic sheath overlying but not embedding the peripheral layer, the tube being the sole metallic pressure barrier for the optical fibre or fibres in the tube, the tube preferably being of the same metal as the strands of the central member.

Fig.1

## Optical Fibre Cable Core

This invention relates to an optical fibre cable core. especially but not exclusively for submarine telecommunications use, and optionally having the capability for electrical power conduction along the cable.

The use of anti-torsional rope in the centre of such cable core is disclosed in GB-B-2157847 and in EP-A-203538. for example. However. the cable of GB-B-2157847, in which optical fibres are loosely housed in individual metal tubes wholly embedded in a plastics sheath surrounding the rope, has disadvantages arising from the encapsulation of the tubes : the sheath must be sufficiently hard to provide adequate compression and abrasion resistance but then the subsequent exposure of tubes for cable jointing is difficult and involves potential damage to the tubes. In the cable of EP-A-203538, the fibre-containing metal tubes are wound over the rope in a layer which consists solely of tubes and electrical conductor wires of similar diameter, in contact with each other and with the rope, giving good compressive protection to the tubes. However, galvanic action on the wires leads to problems associated with hydrogen generation and corrosion, so jeopardising the long term integrity of the fibres, tubes and cable. Moreover, the close proximity of the wires. tubes and rope to each other can be a handicap to any necessary rope jointing.

Accordingly, an object of the invention is to provide an optical fibre cable core with a central metallic stranded member, which uniquely overcomes the problems identified above. the invention having particular relevance to cable designs in which the optical fibres are advantageously accommodated in thin walled laser-welded tubes, which can thereby be of smaller diameter.

The invention provides an optical fibre cable core comprising, as the main longitudinal strength member, a central metallic stranded member comprising, in a fully-occupied peripheral layer of longitudinal members circumscribing or inscribing the stranded member surface, at least one helically-wound, hermetically-sealed laser welded thin-walled metal tube loosely housing at least one optical fibre, and a non-metallic sheath overlying but not embedding the peripheral layer, the tube being the sole metallic pressure barrier for the optical fibre or fibres in the tube.

The statement that the tube is thin-walled means that it has a wall thickness not greater than 0.50mm, and preferably the tube wall has a thickness of between 0.05mm and 0.20mm.

A cable including such a core would preferably, but not necessarily, also include further longitudinal strength members and armouring.

Where the peripheral layer inscribes the surface of the stranded member, the or each tube effectively replaces one of the outermost strands, and it is preferable that the tube should have substantially the same diameter as that of the strands of the stranded member. The stranded member is preferably a metal rope in which all the strands are preferably composed of discrete layers of independently-stranded members.

The peripheral layer. particularly where it circumscribes the surface of the stranded member, preferably comprises tensile wires. i.e. longitudinal strength members, and these are conveniently of the same metal and preferably of substantially the same diameter as that of the tube or tubes. However, the peripheral layer could alternatively, or in addition, comprise non-metallic longitudinal members, such as plastics rods, to fill gaps between other longitudinal members of the layer.

The inherent compression strength of the metal tubes, together with the crush protection provided by any tensile wires or non-metallic fillers, may be designed to provide sufficient impact protection; however, this may be enhanced by the provision of a boundary layer, e.g. a metallic or plastics tape or tube, over the peripheral layer but under the non-metallic sheath. Similarly, a layer may be provided between the stranded member and the peripheral layer, in the case that the latter circumscribes the surface of the stranded member, to assist in jointing and to provide a suitable interface between the stranded member and the next adjacent layer.

The design of non-metallic elements is preferably such that they do not readily bond together thereby embedding the metal tubes. Optionally, the metal tubes may be overcoated with a thin non-metallic layer to ensure freedom of movement, the layer optionally serving as a means of identification.

The nett contribution of tensile elements around the central metallic stranded member can conveniently be used to optimise the torsional and tensile properties of the overall cable and, in addition, permit the use of a less expensive central member of limited torsional performance.

Several examples of submarine cable cores embodying the invention will now be described, with reference to the accompanying drawing, of which :-

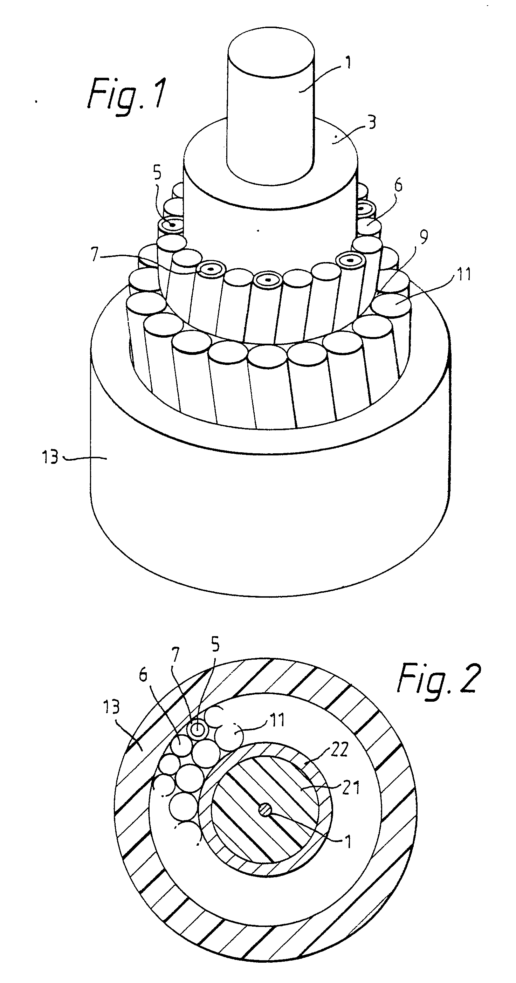

Figures 1 to 5 are diagrammatic cross-sections through the cable core, reference numerals being used to denote corresponding components in each Figure.

With reference to Figure 1, the core comprises a central metal rope 1 consisting of stranded steel wires, capable of conducting electricity as necessary. The rope 1 is optionally surrounded by an inner boundary layer 3 of a metal or plastics tape or tube.

A peripheral layer 4, 5 of longitudinal, helically-wound members overlies the rope 1 or the inner boundary layer 3. This consists of steel wires 4, and a single thin-walled stainless steel tube 5 of the same diameter, all of whose side walls are in contact so that the layer 4, 5 is full. The tube 5 is laser-welded, that is to say it is formed from stainless steel strip folded into tubular form and the edges hermetically joined together by a laser-welding technique, and contains loosely one or more optical fibres or bundles or ribbons. This peripheral layer 4, 5 is optionally protected against impact by an outer boundary layer 6 of metal or plastics tape or tube. The peripheral layer may alternatively incorporate more than a single thin-walled laser-welded steel tube interspersed between the steel wires 4.

The tube or tubes of the cable described are hermetic and pressure-resistant, allowing the use of non-hermetic fibres.

The whole assembly is protected by an outer non-metallic sheath 7, in this example of plastics material, which overlies but does not embed the members of the peripheral layer 4, 5. It is important that these members are not embedded, even in the absence of the outer boundary layer 6, since this provides a greater degree of freedom in use, and moreover allows them to be recovered more easily and safely for repair or replacement, or for jointing.

The sheath 7 may contain a further tape, tube or layer of wires 8 for impact resistance or fish bite protection, or for power feed, or for use as an earthed safety screen.

The tube 5 is the sole metallic pressure barrier for the optical unit or units it contains : the outer boundary layer 6 and further layer 8 are not intended to resist water penetration or hydrostatic pressure, as this would unnecessarily increase the complexity and associated cost of core manufacture.

The selection of the metal for each metallic component of the core is determined by the need to resist galvanic corrosion and hydrogen generation in this example, the metal wires 4 and stranded member 1 are both of the same metal, i.e. steel.

In this example, the peripheral layer 4, 5 circumscribes the surface of the stranded member 1. However, in an alternative form (not shown), the peripheral layer forms part of the stranded member 1, the wires 4 constituting the outermost strands, and the tube 5 replacing one of those strands. In that case, all the strands 1, 4, 5 are preferably of the same diameter and of the same metal.

Figure 2 illustrates a similar core, but in which there are six tubes 5 disposed around the peripheral layer and separated by two or three strain wires 4. The strain wires 4 are selected, where the inner boundary layer 3 is present, to provide with the rope 1 the optimum mechanical characteristics. Where no such boundary layer 3 is provided, the stranded member 1 together with the peripheral layer 4, 5 has mechanical characteristics chosen to allow for tube 5 substitutions.

In the example of Figure 3, the peripheral layer consists exclusively of the tubes 5, each loosely housing a fibre or other optical unit or units, giving a high fibre count or a high degree of fibre strain relief or a compromise between the two.

The core of Figure 4 is the same as that of Figure 2 except for the use of plastics rods 9, as fillers, in place of the strain wires 4, giving a compact structure and facilitating the stranding of the peripheral layer members; the number of expensive tubes 5 is lower than in the core of Figure 3.

The stranding configuration of the tubes and fillers can be optimised to suit since they make no significant contribution to the overall torsional and tensile properties of the cable.

Figure 5 represents a compromise between the extreme examples of Figures 2 to 4, in which a limited number of external tensile wires 4 and tubes 5 share the layer with plastics rods 9 acting as fillers.

## Claims

1. An optical fibre cable core comprising, as the main longitudinal strength member, a central metallic stranded member comprising, in a fully-occupied peripheral layer of longitudinal members circumscribing or inscribing the stranded member surface, at least one helically-wound, hermetically-sealed laser-welded thin-walled metal tube loosely housing at least one optical fibre, and a non-metallic sheath overlying but not embedding the peripheral layer, the tube being the sole metallic pressure barrier for the optical fibre or fibres in the tube.

2. A cable core according to Claim 1 in which the or each tube is of the same metal as the strands of the central member.

3. A cable core according to Claim 1 or 2 wherein the or each tube is formed of stainless steel.

4. A cable core according to Claim 1, 2 or 3 in which the or each tube wall lies between 0.05 and 0.20mm in thickness.

5. A cable core according to any preceding claim, in which the or each tube has substantially the same external diameter as the strands of the stranded member.

6. A cable core according to any preceding claim, in which the or each tube has substantially the same external diameter as the other members of the peripheral layer.

7. A cable core according to any preceding claim, in which the peripheral layer inscribes the surface of the stranded member.

8. A cable core according to any one of Claims 1 to 6, in which the peripheral layer circumscribes the central member and incorporates tensile wires of the same metal as the strands of the central member.

9. A cable core according to any one of Claims 1 to 6, in which the peripheral layer circumscribes the central member and includes a plurality of non-metallic longitudinal members.

10. A cable core according to Claim 8 or 9, in which a boundary layer is provided between the stranded member and the peripheral layer.

11. A cable core according to Claim 10 in which the boundary layer is of the same metal as the strands of the central member.

Fig.1

Fig.2